# FASCICULE DE BREVET EUROPEEN

(11) **EP 1 213 592 B1**
(45) Date de publication et mention de la délivrance du brevet: **02.09.2009**
(21) Numéro de dépôt: 01204510.0
(22) Date de dépôt: 20.11.2001
(51) Int. Cl.: G01V 8/12

(54) **Détecteur optique autoconfigurable**
Selbstkonfigurierender optischer Detektor
Self-configurating optical detector

(30) Priorité: 06.12.2000 FR 0015944
(43) Date de publication de la demande: 12.06.2002
(73) Titulaire: Schneider Electric Industries SAS, 92500 Rueil-Malmaison (FR)
(72) Inventeur: Couillaud, Frédéric, Ing., 16000 Angouleme (FR); Guillot, Alain, Ing., 16730 Fleac (FR); Laurent, Jean-Pierre, Ing., 16110 Marillac le Franc (FR)

(56) Documents cités:
- EP-A- 0 923 140
- US-A- 4 879 461
- US-A- 5 541 403
- US-A- 6 157 024

## Description

La présente invention concerne un détecteur optique qui a la propriété d'être auto-configurable, de manière à pouvoir fonctionner en mode proximité ou en mode proximité avec effacement d'arrière-plan, un tel détecteur comprenant un système d'émission et un système de réception, ce dernier étant doté d'au moins un composant photorécepteur apte à délivrer un signal de réception significatif de la présence ou de la distance d'un objet sur le trajet d'un faisceau d'émission.

On sait que les détecteurs optiques émettant un faisceau lumineux et utilisant la réflexion diffuse de lumière sur l'objet à détecter exploitent soit une mesure d'énergie dans une famille dite de "proximité", soit une mesure de déplacement de la tâche lumineuse reçue par le composant photorécepteur, par effet de triangulation, dans une famille dite de "proximité avec effacement d'arrière-plan".

En pratique, il serait souhaitable qu'un tel détecteur puisse déterminer automatiquement s'il doit fonctionner en mode proximité ou en mode proximité avec effacement d'arrière-plan, en fonction de la distance de l'arrière-plan constatée.

L'invention a pour but de répondre à ces desiderata.

Selon l'invention, le premier mode de fonctionnement est le mode proximité et le deuxième mode de fonctionnement est le mode proximité avec effacement d'arrière plan, et le détecteur comprend des moyens matériels et logiciels de détection et de configuration aptes à reconnaître le mode approprié par comparaison du signal de réception avec au moins un seuil pour mesurer la distance de l'arrière-plan, et à commuter automatiquement le système de réception dans un état proximité ou un état proximité avec effacement d'arrière plan en fonction du résultat de la comparaison.

La commutation du système de réception dans l'un ou l'autre état est effectuée automatiquement ou à l'aide d'un moyen de validation.

La description va être faite ci-après d'un mode de réalisation non limitatif de l'invention, en regard des dessins annexés.

La figure 1 représente schématiquement un détecteur optique selon l'invention et ses diverses possibilités d'utilisation.

La figure 2 représente schématiquement un composant photodétecteur utilisé dans le détecteur de la figure 1.

La figure 3 montre schématiquement un diagramme illustrant le procédé selon l'invention.

La figure 4 est un organigramme illustrant la séquence du procédé de mise en oeuvre du détecteur.

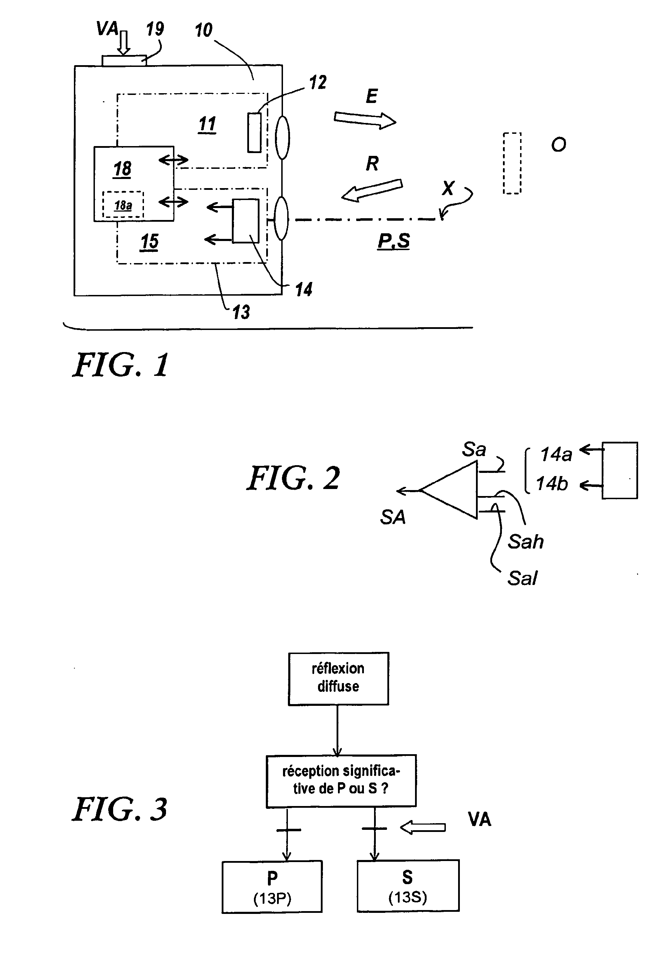

Le détecteur optique bimode de la figure 1 comprend un système d'émission 10 doté d'un circuit électronique 11, de moyens logiciels associés et d'un organe photoémetteur 12 afin d'émettre un faisceau d'émission E. Il comprend aussi un système de réception 13 doté, pour exploiter un faisceau de réception R, d'un organe photorécepteur 14 d'axe X, d'un circuit électronique de traitement 15 et de moyens logiciels associés.

Le système de réception 13 exploite la réflexion diffuse de la lumière sur l'objet, et il est agencé pour être activé dans un état 13P dans le mode "proximité" P ou dans un état 13S dans le mode "proximité avec effacement d'arrière plan" S. L'objet O renvoie un faisceau R qui produit sur le composant une tâche lumineuse. Dans le mode proximité P, le circuit électronique 15 traite la variation d'intensité de la tâche pour détecter l'objet. Dans le mode proximité avec effacement d'arrière plan S, le détecteur exploite en triangulation l'inclinaison du faisceau réfléchi et le circuit 15 exploite la variation de position de la tâche sur l'organe photorécepteur 14.

Un exemple de composant photorécepteur 14 est représenté sur la figure 2. Il présente par exemple deux voies de sortie et il peut s'agir d'un composant dit PSD ("position sensing device") ou autre composant analogue dont les sorties 14a et 14b servent à créer le signal de réception Sa. Il convient de rappeler qu'un composant PSD fonctionne avec amplification de ses grandeurs de sortie et comparaison des grandeurs amplifiées.

Le détecteur comprend des moyens matériels et logiciels de détection et de configuration 18 qui sont associés notamment au système de réception et qui comprennent un microcontrôleur ou autre organe logique apte à traiter et évaluer le signal de réception Sa et à générer le signal SA. Le signal de réception Sa est ainsi comparé à un seuil haut Sah et à un seuil bas Sal pour engendrer le signal SA qui est indicatif du mode reconnu. En fonction de l'état du signal SA, le système de réception et le microcontrôleur sont commutés vers un état correspondant au mode proximité P ou au mode proximité avec effacement d'arrière plan S.

La figure 3 explicite brièvement l'autodétermination du détecteur optique dans le mode P ou le mode S. Le système d'émission 10 du détecteur est mis en oeuvre et les moyens de détection et de configuration 18 du système de réception 13 détectent si, en présence d'un arrière-plan, la réception est significative du mode P, ou du mode S, par mesure de la distance d'arrière-plan, comparaison de cette mesure avec des seuils Sax ou, plus précisément, un seuil haut Sah et un seuil bas Sal et, en fonction du résultat de la comparaison, configuration automatique du système de réception à l'état 13P ou 13S. En pratique, si la distance d'arrière plan est située dans un intervalle prédéterminé (par exemple entre 30 cm et 130cm), le système de réception 13 est configuré dans l'état 13S de proximité avec effacement d'arrière plan (traitement de position) et, si la distance d'arrière plan est située hors de cet intervalle, le système de réception est configuré dans l'état 13P de proximité (traitement d'énergie).

Une action de validation VA du mode reconnu est alors effectuée. Cette action peut utiliser un moyen de temporisation 18a (voir en tirets figure 1) ; elle est de préférence exercée par l'opérateur au moyen d'un poussoir 19 ou autre organe de dialogue (en traits pleins figure 1). En l'absence d'action de validation, la configuration du système de réception 13 dans l'état 13P ou 13S est automatique.

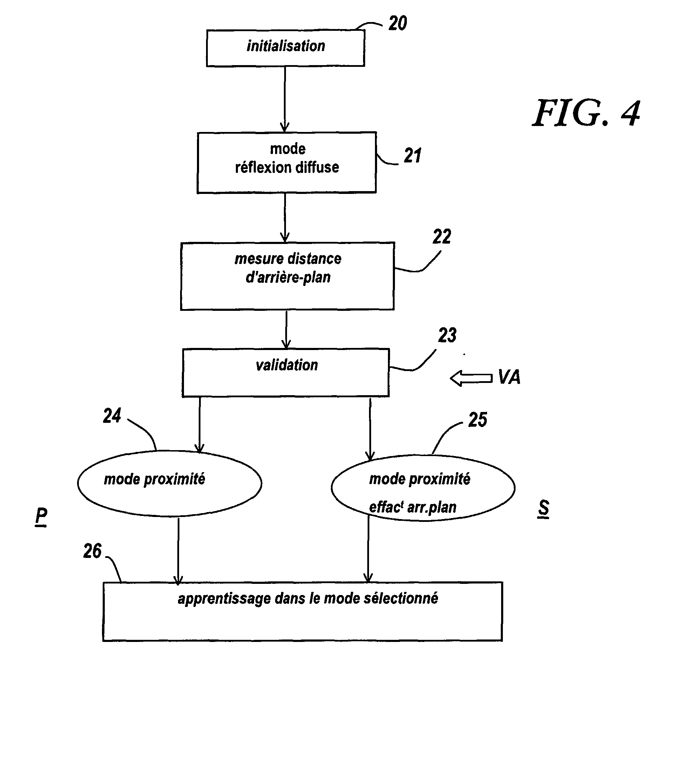

La figure 4 illustre plus en détail un exemple d'une séquence de configuration suivie par le détecteur. Lors d'une initialisation 20, produite à l'installation du détecteur ou par un reset de l'utilisateur, le détecteur entre dans une phase d'émission 21 adaptée à une réflexion diffuse. Le système de réception 13 effectue en 22 une mesure de la distance d'arrière plan. Selon le résultat de la mesure, le détecteur commute comme on l'a vu précédemment après une phase de validation 23 en mode proximité 24 (le système de réception 13 est alors mis dans l'état 13P impliquant la mise en oeuvre de moyens de traitement de l'énergie reçue relativement à un seuil donné) ou en mode proximité avec effacement d'arrière plan 25 (le système de réception 13 est alors mis dans l'état 13S impliquant la mise en oeuvre de moyens de traitement de la position de la tâche lumineuse sur le composant photorécepteur). Lorsque le détecteur ne comporte pas de phase de validation 23, le passage du système 13 à l'état 13P ou 13S est automatique. Quand la configuration est réalisée, le détecteur entre dans une étape d'apprentissage 26 qui apprend l'arrière plan, et au terme de cette étape il est opérationnel.

## Revendications

1. Détecteur optique comprenant un système d'émission et un système de réception le système de réception étant doté d'au moins un composant photorécepteur (14) et étant apte à délivrer un signal de réception (S) significatif de la présence ou de la distance d'un objet sur le trajet d'un faisceau d'émission, et étant configurable pour être activé, soit dans un premier mode de fonctionnement, soit dans un deuxième mode de fonctionnement,
- le premier mode de fonctionnement (M1) étant le mode proximité (P) et le deuxième mode de fonctionnement (M2) étant le mode proximité avec effacement d'arrière plan (S), **caractérisé par le fait que**
- le détecteur comprend des moyens matériels et logiciels de détection et de configuration (18) aptes à reconnaître le mode approprié par comparaison du signal de réception (Sa) avec au moins un seuil (Sax) pour mesurer la distance de l'arrière-plan, et à commuter le système de réception (13) dans un état proximité (13P) ou dans un état proximité avec effacement d'arrière plan (13S) en fonction du résultat (SA) de la comparaison.

2. Détecteur selon la revendication 1, **caractérisé par le fait que** les moyens de détection et de configuration (18) comprennent un moyen de validation (18a,19) du mode de fonctionnement reconnu.

3. Détecteur selon la revendication 1, **caractérisé par le fait que** les moyens de détection et de configuration (18) commutent automatiquement le système de réception (13) dans l'état proximité (13P) ou proximité avec effacement d'arrière plan (13S) après reconnaissance du mode de fonctionnement.

4. Détecteur selon la revendication 2, **caractérisé par le fait que** le moyen de validation (19) est un organe de dialogue mis en oeuvre par un opérateur.

5. Détecteur selon la revendication 1, **caractérisé par le fait que** les moyens de détection et de configuration (18) commutent, selon l'état du signal résultant de la comparaison (SA), les zones actives ou voies de sortie du ou des composants photorécepteurs (14).

## Claims

1. Optical detector comprising an emission system and a reception system, the reception system being provided with at least one photoreceptor component (14) and capable of outputting a reception signal (S) indicating whether the object is on or the path of an emission beam or the distance of the object along the beam, and being configurable so that it can be activated either in a first operating mode or in a second operating mode,
- the first operating mode (M1) being proximity mode (P) and the second operating mode (M2) being proximity with background elimination mode (S), **characterized by** the fact that
- the detector comprises hardware and software means for detection and configuration (18) capable of recognising the appropriate mode by comparing the reception signal (Sa) with at least one threshold (Sax) to measure the background distance and to switch the reception system (13) to a proximity state (13P) or a proximity with background elimination state (13S) depending on the result (SA) of the comparison.

2. Detector according to claim 1, **characterized by** the fact that the detection and configuration means (18) comprise a means of validating (18a, 19) the recognized operating mode.

3. Detector according to claim 1, **characterized by** the fact that the detection and configuration means (18) automatically switch the reception system (13) into the proximity state (13P) or proximity with background elimination state (13S) after the operating mode has been recognized.

4. Detector according to claim 2, **characterized by** the fact that the validation means (19) is a dialog device used by an operator.

5. Detector according to claim 1, **characterized by** the fact that the detection and configuration means (18) switch active areas or output channels of the photoreceptor component(s) (14), depending on the state of the signal output from the comparison (SA).

## Patentansprüche

1. Optischer Detektor, der ein Sendesystem und ein Empfangssystem enthält, wobei das Empfangssystem mit wenigstens einer Photorezeptorkomponente (14) versehen ist und dazu ausgelegt ist, ein Empfangssignal (S) auszugeben, das das Vorhandensein oder den Abstand eines Objekts in der Bahn eines Sendestrahlenbündels angibt, und konfigurierbar ist, um entweder in einer ersten Betriebsart oder in einer zweiten Betriebsart aktiviert zu werden,
- wobei die erste Betriebsart (M1) die Nähe-Betriebsart (P) ist und die zweite Betriebsart (M2) die Nähe-Betriebsart mit Hintergrundauslöschung (S) ist, **dadurch gekennzeichnet, dass**
- der Detektor Hardware- und Software-Mittel (18) zur Detektion und Konfiguration enthält, die dazu ausgelegt sind, die geeignete Betriebsart durch Vergleich des Empfangssignals (Sa) mit wenigstens einem Schwellenwert (Sax) zu erkennen, um den Abstand des Hintergrundes zu messen, und das Empfangssystem (13) in Abhängigkeit von dem Ergebnis (SA) des Vergleichs in einen Nähe-Zustand (13P) oder in einen Nähe-Zustand mit Hintergrundauslöschung (13S) umzuschalten.

2. Detektor nach Anspruch 1, **dadurch gekennzeichnet, dass** die Detektions- und Konfigurationsmittel (18) Mittel (18a, 19) zum Validieren der erkannten Betriebsart enthalten.

3. Detektor nach Anspruch 1, **dadurch gekennzeichnet, dass** die Detektions- und Konfigurationsmittel (18) das Empfangssystem (13) nach der Erkennung der Betriebsart automatisch in den Nähe-Zustand (13P) oder in den Nähe-Zustand mit Hintergrundauslöschung (13S) umschalten.

4. Detektor nach Anspruch 2, **dadurch gekennzeichnet, dass** das Validierungsmittel (19) ein Dialogorgan ist, das durch einen Bediener betrieben wird.

5. Detektor nach Anspruch 1, **dadurch gekennzeichnet, dass** die Detektions- und Konfigurationsmittel (18) je nach Zustand des aus dem Vergleich (SA) sich ergebenden Signals die aktiven Zonen oder Ausgangswege der Photorezeptorkomponente(n) (14) umschalten.
